# FASCICULE DE BREVET EUROPEEN

(11) **EP 3 907 394 B1**
(45) Date de publication et mention de la délivrance du brevet: **03.07.2024**
(21) Numéro de dépôt: 21171909.1
(22) Date de dépôt: 03.05.2021
(51) Int. Cl.: F02D 41/04, B60W 20/15, F01P 7/16

(54) **PROCÉDÉ DE GESTION THERMIQUE D'UN VÉHICULE HYBRIDE**
VERFAHREN ZUR THERMISCHEN STEUERUNG EINES HYBRIDFAHRZEUGS
METHOD FOR THERMAL CONTROL OF A HYBRID VEHICLE

(30) Priorité: 05.05.2020 FR 2004454
(43) Date de publication de la demande: 10.11.2021
(73) Titulaire: NEW H POWERTRAIN HOLDING, S.L.U., 47008 Valladolid (ES)
(72) Inventeur: RUBY, Stéphane, 92500 Rueil-Malmaison (FR)
(74) Mandataire: Renault Group

(56) Documents cités:
- WO-A1-2017/076444
- DE-A1-102013 009 913
- DE-A1-102016 105 307
- JP-A- 2010 089 718
- US-A- 5 826 671

## Description

L'invention concerne un procédé de gestion thermique d'un véhicule hybride. L'invention concerne notamment un procédé de gestion d'une température d'un moteur thermique d'un véhicule automobile hybride.

La réduction de l'empreinte carbone des véhicules constitue un axe majeur de l'innovation technologique, notamment dans l'industrie automobile.

Développés dans ce contexte, les véhicules automobiles hybrides permettent de réduire les émissions de CO₂ ainsi que la consommation de carburant.

Toutefois, les fréquentes alternances entre l'usage du moteur thermique et l'usage du moteur électrique modifient les conditions de fonctionnement du moteur thermique. En particulier, lorsque le moteur thermique redémarre après une phase de conduite électrique, la température des parois des chambres de combustion est souvent faible.

Or de faibles températures sur les parois des chambres de combustion entrainent une augmentation des émissions polluantes du véhicule, notamment des particules de suie, des hydrocarbures imbrûlés (HC) et du monoxyde de carbone (CO). De plus, ces faibles températures induisent également une augmentation de la consommation de carburant, du fait de frottements internes du moteur.

Le but de l'invention est de fournir un système et un procédé de gestion thermique d'un véhicule hybride améliorant les systèmes et procédés de gestion thermique connus de l'art antérieur, voir par exemple WO 2017/076444 A1. En particulier, l'invention permet de réaliser un système et un procédé de gestion thermique qui réduit les émissions polluantes d'un véhicule hybride ainsi que sa consommation de carburant.

A cet effet l'invention porte sur un procédé de gestion d'une température d'un moteur thermique d'un véhicule automobile hybride. Le procédé comprend les étapes suivantes :
- une étape de détermination d'un arrêt prochain du moteur thermique, puis
- une étape d'arrêt d'un moyen de refroidissement du moteur thermique, puis au terme d'une durée non nulle
- une étape d'arrêt du moteur thermique.

L'étape de détermination de l'arrêt prochain du moteur thermique comprend une sous-étape de calcul d'une durée restante avant ledit arrêt prochain du moteur.

Le procédé comprend une étape de calcul d'une durée d'anticipation entre l'arrêt du moyen de refroidissement et l'arrêt du moteur thermique.

L'étape d'arrêt d'un moyen de refroidissement est exécutée dès que la durée d'anticipation est supérieure ou égale à la durée restante.

La durée restante est calculée en fonction d'au moins un des paramètres suivants :
- un niveau de charge d'une batterie du véhicule hybride,
- une température du moteur thermique,
- une température du système de post-traitement des émissions du moteur thermique,
- une puissance du moteur thermique,
- un couple du moteur thermique,
- un régime du moteur thermique.

La durée d'anticipation peut être calculée en fonction d'au moins un des paramètres suivants :
- une température du moteur thermique,
- une puissance du moteur thermique,
- un couple du moteur thermique,
- un régime du moteur thermique,
- un paramètre d'endommagement thermomécanique du moteur thermique.

Les valeurs des paramètres peuvent être définies soit par des mesures à un instant donné, soit par des extrapolations linéaires à partir de mesures antérieures, soit par des modèles d'évolution de ces paramètres.

Le procédé comprend une étape de remise en marche du moyen de refroidissement du moteur thermique après l'étape d'arrêt du moyen de refroidissement si une caractéristique de fonctionnement atteint ou dépasse une valeur prédéterminée, notamment si une température du moteur thermique devient supérieure ou égale à un seuil de température et/ou si la puissance du moteur thermique devient supérieure ou égale à un seuil de puissance et/ou si le régime du moteur thermique devient supérieur ou égal à un seuil de régime moteur.

L'étape de remise en marche du moyen de refroidissement est exécutée si une utilisation d'un chauffage ou d'une climatisation dans un habitacle du véhicule est détectée.

Le procédé peut comprendre une étape de redémarrage à chaud du moteur thermique après l'étape d'arrêt du moteur thermique.

L'invention porte aussi sur un système de refroidissement pour un moteur thermique d'un véhicule automobile hybride comprenant les éléments matériels et/ou logiciels permettant de mettre en oeuvre le procédé défini précédem ment.

L'invention porte aussi sur un véhicule automobile comprenant le système de refroidissement défini précédemment.

Le dessin annexé représente, à titre d'exemple, un mode de réalisation d'un véhicule automobile hybride et deux modes d'exécution d'un procédé de gestion thermique d'un véhicule hybride.
La figure 1 représente schématiquement un véhicule automobile hybride configuré pour mettre en oeuvre un procédé de gestion thermique selon un mode de réalisation de l'invention.
La figure 2 représente un mode de réalisation d'un système de refroidissement du véhicule.
La figure 3 est un ordinogramme d'un premier mode d'exécution d'un procédé de gestion thermique d'un moteur thermique du véhicule.
La figure 4 est un ordinogramme d'un deuxième mode d'exécution d'un procédé de gestion thermique du moteur thermique du véhicule.
La figure 5 illustre un mode de réalisation d'un calcul d'une durée restante avant arrêt du moteur.
La figure 6 est un graphique de l'état de charge de la batterie en fonction du temps illustrant un premier mode de calcul de la durée restante.
La figure 7 est un graphique d'une température du moteur thermique en fonction du temps illustrant un deuxième mode de calcul de la durée restante.
La figure 8 illustre un mode de réalisation d'un calcul d'une durée d'anticipation entre l'arrêt d'un moyen de refroidissement et l'arrêt du moteur thermique.
La figure 9 est un graphique représentant la durée d'anticipation en fonction de la température d'un liquide de refroidissement mesurée en sortie du moteur thermique.
La figure 10 est un schéma illustrant l'évolution temporelle relative de la durée restante et de la durée d'anticipation dans un premier cas d'exécution du procédé de gestion thermique.
La figure 11 est un schéma illustrant l'évolution temporelle relative de la durée restante et de la durée d'anticipation dans un second cas d'exécution du procédé de gestion thermique.
La figure 12 illustre l'évolution temporelle de la température du moteur en fonction d'un choix de stratégie de refroidissement du moteur.
La figure 13 décrit une représentation alternative du procédé de gestion thermique.

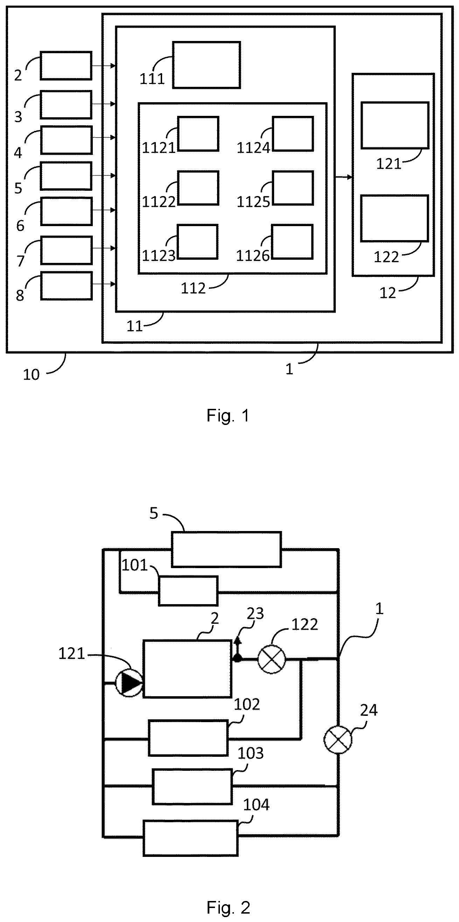

Un mode de réalisation d'un véhicule automobile 10 est décrit ci-après en référence à la figure 1. Le véhicule automobile est un véhicule automobile hybride de n'importe quel type, notamment un véhicule de tourisme ou un véhicule utilitaire.

Par véhicule hybride on comprend un véhicule comprenant au moins deux moteurs aptes à fonctionner alternativement pour déplacer le véhicule. En particulier le véhicule 1 comprend un moteur thermique 2 et un moteur électrique 4.

Outre le moteur thermique 2 et le moteur électrique 4, le véhicule 10 automobile comprend :
- un système de refroidissement 1,
- une batterie 3,
- un dispositif de chauffage de l'habitacle 5,
- un dispositif de climatisation de l'habitacle 6,
- un système de post-traitement des émissions polluantes 7,
- un capteur de température ambiante 8.

Le système de refroidissement 1 comprend notamment une unité de commande électronique 11 et un moyen de refroidissement 12. L'unité de commande électronique 11 comprend un microprocesseur 111 et une mémoire 112. La mémoire 112 constitue un support d'enregistrement de données comprenant des instructions de code qui, lorsqu'elles sont exécutées par le microprocesseur 111, conduisent celui-ci à mettre en oeuvre le procédé défini dans les revendications et/ou le procédé décrit plus loin dans ce document.

Dans un mode de réalisation, l'unité de commande électronique 11 peut être une unité de commande électronique configurée pour contrôler le moteur thermique, également dénommé "calculateur moteur".

Un mode de réalisation d'un système de refroidissement 1 d'un véhicule thermique est représenté par la figure 2. Le système de refroidissement 1 comprend une pompe à eau 121, une vanne 122, un circuit permettant la circulation du liquide de refroidissement dans ou autour de différents composants du véhicule automobile 10, parmi lesquels le moteur thermique 2, un turbo 101, un échangeur eau/huile 102, un réservoir 103, un radiateur 104 et un système de chauffage de l'habitacle 5. Le système de refroidissement 1 comprend par ailleurs un capteur de température 23 mesurant la température du liquide de refroidissement en sortie du moteur, notée TCO, et un thermostat 24.

La circulation du liquide de refroidissement dans le circuit est assurée par la pompe à eau 121. Afin de mettre en oeuvre l'invention, le système de refroidissement 1 doit pouvoir être piloté indépendamment du moteur thermique 2, en particulier le système de refroidissement 1 doit pouvoir être arrêté et redémarré indépendamment du moteur thermique. A cet effet le système de refroidissement 1 comprend un moyen de refroidissement 12 qui peut être commandé ou autrement dit piloté. Le moyen de refroidissement 12 peut être par exemple la pompe à eau électrique 121 ou une pompe à eau mécanique débrayable ou équipée d'un obturateur, ou toute autre solution qui remplisse cette condition. Dans un mode de réalisation alternatif, le moyen de refroidissement 12 peut désigner une vanne du système de refroidissement. Par exemple, le pilotage indépendant du moyen de refroidissement peut s'effectuer, par ouverture ou fermeture de la vanne 122, par exemple située en sortie du moteur thermique 2. Le terme "moyen de refroidissement" désigne un élément du système de refroidissement 1 dont l'activation ou la désactivation permet d'interrompre le refroidissement du moteur thermique.

Le moteur thermique 2, ou moteur à combustion, est un moteur requérant l'utilisation d'un carburant pour son fonctionnement. Le carburant peut être notamment de l'essence, du gazole, un biocarburant, de l'éthanol, du gaz de pétrole liquéfié. Le moteur thermique comprend des chambres de combustion dans lesquelles se produisent une combustion du carburant.

La batterie 3 est une réserve d'énergie permettant le fonctionnement du moteur électrique 4. Son niveau de charge peut conditionner l'alternance entre le moteur thermique et le moteur électrique du véhicule hybride 10. Dans un mode de réalisation, l'unité de commande électronique 11 a accès à une information de l'état de charge de la batterie 3. Dans la suite de ce document, l'état de charge de la batterie 3 est aussi nommé SOC, en référence au terme anglais « state of charge ».

Le système de post-traitement des émissions polluantes 7 a pour rôle de traiter les émissions polluantes en sortie du moteur, dont les hydrocarbures imbrûlés et le monoxyde de carbone, de réduire les oxydes d'azote et de filtrer les particules solides. Le système de post-traitement inclut un catalyseur, dont l'efficacité est optimale à haute température.

Différentes mesures ou estimations de températures du moteur thermique peuvent être prises en compte dans le procédé de gestion thermique qui sera détaillé par la suite:
- une température du liquide de refroidissement TCO mesurée par le capteur de température 23 du circuit de refroidissement, ce capteur de température pouvant être situé en sortie du refroidissement moteur,
- des températures mesurées en différents points du moteur thermique 2, par exemple sur les parois du moteur thermique,
- une température estimée des parois des chambres de combustion du moteur thermique 2.

Dans la suite du document, quand le point de mesure n'est pas spécifiquement précisé, le terme « température du moteur thermique » désigne indifféremment une de ces mesures ou estimation.

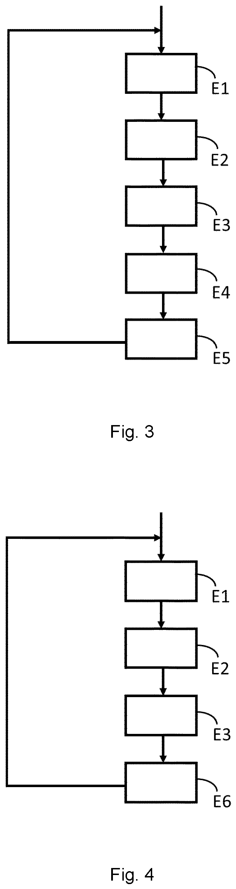

Deux modes d'exécution d'un procédé de gestion thermique sont décrits ci-après en référence aux figures 3 et 4. Le procédé de gestion thermique peut aussi être vu comme étant un procédé de fonctionnement du système de refroidissement 1 ou comme un procédé de fonctionnement du véhicule automobile hybride 10.

Le premier mode d'exécution correspond au déroulement d'un cycle complet de mise en oeuvre du procédé. Autrement dit, ce mode d'exécution décrit le déroulement nominal du procédé, en excluant les situations particulières susceptibles de modifier l'enchainement des étapes du procédé. Les situations particulières sont traitées dans la description du deuxième mode de fonctionnement.

Le procédé peut être décomposé en six étapes E1, E2, E3, E4, E5 et E6.

Dans une première étape E1, on détermine un arrêt prochain du moteur thermique 2. Par arrêt du moteur, ou encore extinction du moteur, on comprend une interruption de la combustion du carburant dans les chambres de combustion du moteur. L'interruption de la combustion du carburant conduit à une interruption du mouvement de pièces mécaniques du moteur, par exemple une interruption du déplacement de pistons du moteur et/ou une interruption de la rotation du vilebrequin du moteur. Un arrêt prochain du moteur thermique signifie un arrêt futur, c'est-à-dire un arrêt ultérieur ou encore un arrêt à venir du moteur thermique.

Le fonctionnement du véhicule automobile hybride 10 repose sur l'alternance entre l'utilisation du moteur thermique 2 et l'utilisation du moteur électrique 4.

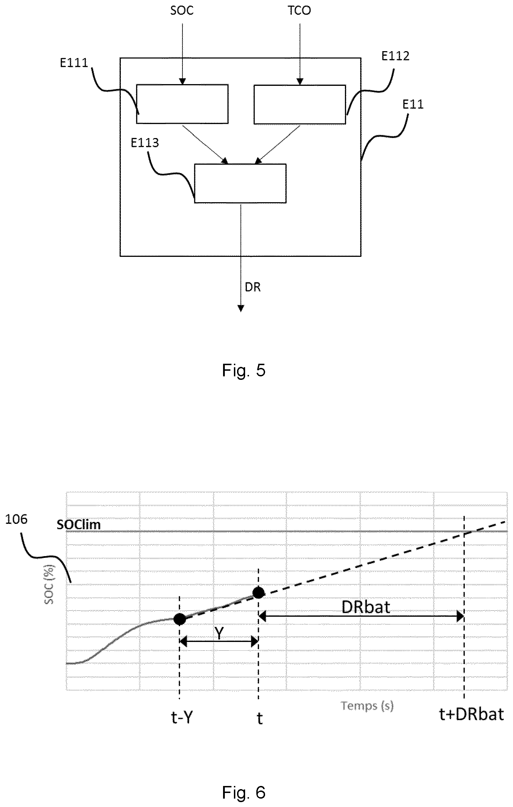

Dans un mode de réalisation représenté par les figures 5 à 7, l'alternance entre le moteur thermique et le moteur électrique peut être régie par des paramètres incluant l'état de charge SOC de la batterie 3 et la température TCO du liquide de refroidissement.

En particulier, l'arrêt du moteur thermique peut intervenir lorsque les deux conditions suivantes sont réunies :
- l'état de charge SOC atteint un seuil minimum prédéfini dit SOClim, et
- la température TCO atteint un seuil minimum prédéfini dit TCOlim.

Dans ce mode de réalisation, la détermination d'un arrêt prochain du moteur thermique repose donc sur une estimation de l'évolution temporelle des paramètres SOC et/ou TCO.

La première étape E1 comprend une sous-étape E11 de calcul d'une durée restante DR avant l'arrêt du moteur. La durée restante DR est la durée séparant l'instant présent t de l'instant de l'arrêt du moteur. La durée restante est non nulle.

La figure 5 présente un mode de réalisation de la sous-étape E11 de calcul de la durée restante DR à partir des paramètres SOC et TCO mesurés à deux instants, l'instant présent t et un instant antérieur t-Y. L'instant présent t correspond à l'instant d'exécution du procédé. Y est un intervalle de temps donné, par exemple 30 secondes.

La sous étape E11 peut se décomposer en trois sous-étapes :
- une sous-étape E111 d'estimation d'une durée restante DRbat, à l'issue de laquelle l'état de charge SOC aura atteint un seuil minimum SOClim,
- une sous-étape E112 d'estimation d'une durée restante DRliq, à l'issue de laquelle la température TCO atteint un seuil minimum TCOlim,
- une sous-étape E113 d'estimation de la durée restante DR avant arrêt du moteur à partir des durées restantes DRbat et DRliq.

Dans le mode de réalisation présenté, les estimations des sous-étapes E111 et E112 sont basées, respectivement, sur des extrapolations linéaires des variables SOC et TCO, entre les instants t-Y et t. Autrement dit,
- la durée restante DRbat correspond au délai entre l'instant t et l'instant auquel l'extrapolation linéaire de la variable SOC atteint la valeur SOClim,
- la durée restante DRliq correspond au délai entre l'instant t et l'instant auquel l'extrapolation linéaire de la variable TCO atteint la valeur TCOlim.

Dans un mode de réalisation de la sous-étape E113, on détermine la durée restante DR avant arrêt du moteur comme étant le maximum des deux durées restantes estimées, DRbat et DRliq. En variante, la durée restante DR avant arrêt du moteur pourrait être définie comme égale à l'une des deux durées restantes estimées DRbat et DRliq.

Dans une variante de réalisation, les sous-étapes d'estimation E111 et/ou E112 peuvent utiliser des modèles d'évolution non linéaires des variables SOC et/ou TCO.

Dans des variantes de réalisation, d'autres paramètres que l'état de charge de la batterie ou la température du liquide de refroidissement peuvent être pris en compte dans la détermination de la durée restante DR avant arrêt du moteur thermique 2.

Par exemple, le calcul de la durée restante DR avant arrêt du moteur peut prendre en compte d'autres mesures de températures, effectuées en différents points du moteur thermique 2. Alternativement, ce calcul peut également prendre en compte une ou plusieurs températures estimées en différents points des parois des chambres de combustion du moteur thermique 2. Alternativement, ce calcul peut aussi prendre en compte des mesures ou estimations de températures du système de post-traitement des émissions du moteur thermique.

De plus l'évolution de paramètres de conduite peut être prise en compte dans le calcul de la durée restante DR, par exemple l'évolution de la puissance et/ou du couple et/ou du régime moteur. Avantageusement, l'évolution de ces paramètres est moyennée sur une durée donnée.

Les différentes variantes précédemment présentées peuvent être combinées entre elles.

Dans une deuxième étape E2, on calcule une durée d'anticipation DT égale à un délai entre l'arrêt du moyen de refroidissement 12 et ledit arrêt prochain du moteur thermique 2. Autrement dit, la durée d'anticipation DT est égale à la durée pendant laquelle le moteur thermique pourrait fonctionner tout en ayant coupé son refroidissement.

Différentes méthodes sont envisageables pour déterminer la valeur de la durée d'anticipation DT.

La durée d'anticipation DT peut prendre une valeur constante, par exemple 20 secondes.

La durée d'anticipation DT peut également évoluer comme une fonction décroissante de la température du liquide de refroidissement TCO. Cette fonction n'est pas nécessairement strictement décroissante : elle peut, par exemple, comprendre des plateaux constants sur certaines plages de température.

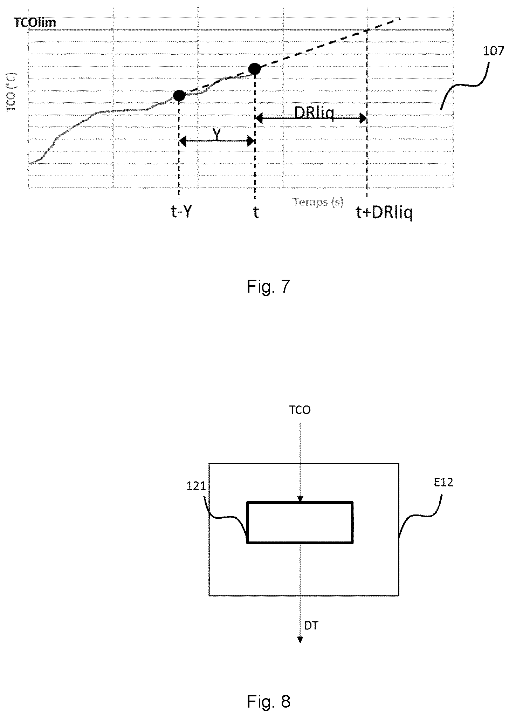

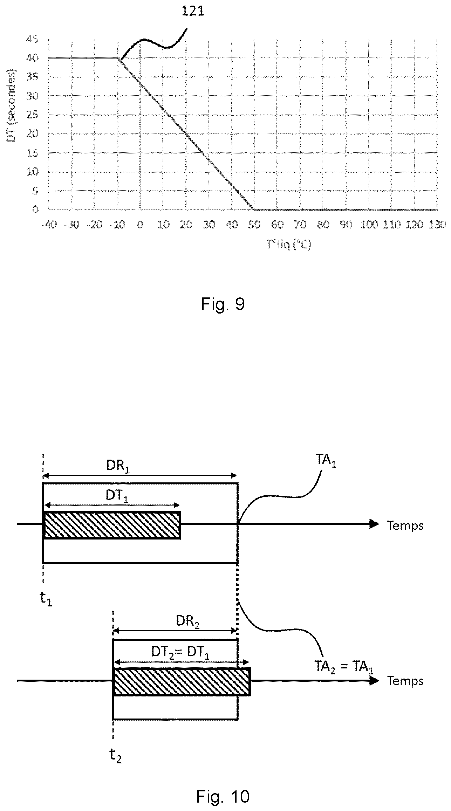

Les figures 8 et 9 décrivent un mode de réalisation de l'étape E2. La figure 9 est un graphique illustrant la variation de la durée d'anticipation DT en fonction de la température TCO :
- pour des valeurs de température TCO inférieures à -10°C, la fonction est constante et fixe la durée d'anticipation DT à 40s,
- pour des valeurs de température TCO supérieures à 50°C, la fonction est constante et fixe la durée d'anticipation DT à 0s,
- lorsque la température TCO se situe entre -10°C et 50°C, la fonction varie linéairement.

Dans un autre mode de réalisation, le calcul de la durée d'anticipation DT peut prendre en compte d'autres mesures de températures, effectuées en différents points du moteur thermique 2. Alternativement, ce calcul peut également prendre en compte une ou plusieurs températures estimées en différents points des parois des chambres de combustion du moteur thermique 2. Alternativement, ce calcul peut aussi prendre en compte des mesures ou estimations de températures du système de post-traitement des émissions du moteur thermique.

Dans un autre mode de réalisation de l'étape E2, la durée d'anticipation DT peut évoluer comme une fonction décroissante de mesures de la puissance et/ou du couple et/ou du régime du moteur thermique. Ces mesures peuvent être moyennées sur une fenêtre de temps précédent l'instant t du calcul.

Par exemple, dans un mode de réalisation de l'étape E2, on peut déterminer la durée d'anticipation DT à partir d'une puissance dite moyennée, correspondant à la puissance du moteur thermique moyennée sur un intervalle de temps donné, par exemple sur les 10 dernières secondes.

Un exemple de réalisation de l'étape E2 peut mettre en oeuvre une fonction F telle que : DT=F(Pm), où :
Pm désigne la puissance du moteur thermique moyennée sur un intervalle de temps donné, et F est définie par les règles suivantes :
- pour des valeurs de puissance moyenne inférieures à 5kW, la fonction F est constante et fixe DT à 40s,
- pour des valeurs de puissance moyenne supérieures à 30kW, la fonction F est constante et fixe la valeur de DT à 0s,
- lorsque la puissance moyenne se situe entre 5kW et 30kW, la fonction F varie linéairement.

Dans une variante de ce mode de réalisation, on peut tenir compte lors de l'étape E2 à la fois de la température du liquide de refroidissement TCO et de la puissance moyenne du moteur. Par exemple, on peut mettre en oeuvre plusieurs fonctions Fᵢ, chacune étant associée à un intervalle Intᵢ de valeurs de températures TCO. Autrement dit, pour des valeurs de température TCO comprises dans un intervalle Intᵢ, on peut mettre en oeuvre une fonction Fᵢ telle que DT=Fᵢ(Pm), où Pm désigne la puissance du moteur thermique moyennée sur un intervalle de temps donné.

La durée d'anticipation DT variera dans ce cas de façon décroissante par rapport à la température TCO et à la puissance moyennée du moteur.

La température ambiante mesurée par le capteur 8 peut également être prise en compte dans le calcul du délai d'anticipation DT, car la température de l'air extérieur intervient dans l'évolution de la température du moteur :
- si la température extérieure est élevée, la température du moteur thermique augmentera rapidement lors de la phase d'arrêt du moyen de refroidissement 12 avant arrêt du moteur, et diminuera lentement lors de la phase d'arrêt du moteur thermique,
- si la température extérieure est faible, la température du moteur thermique augmentera moins vite lors de la phase d'arrêt du moyen de refroidissement 12 avant arrêt du moteur, et diminuera rapidement lors de la phase d'arrêt du moteur thermique.

Dans un autre mode de réalisation de l'étape E2, la durée d'anticipation DT peut évoluer en fonction d'un modèle d'endommagement thermomécanique du moteur thermique 2. Ce modèle permet d'estimer un endommagement du moteur ou un risque d'endommagement du moteur en fonction de paramètres de conduite, tels que la puissance et/ou le régime du moteur thermique du véhicule 10, et/ou en fonction de mesures et/ou d'estimations de température, notamment de températures des parois des chambres de combustion du moteur thermique.

Ensuite, dans une troisième étape E3, on compare la durée restante DR et la durée d'anticipation DT obtenus lors des étapes E1 et E2. Si la durée d'anticipation DT est supérieure ou égale à la durée restante DR, alors on arrête le moyen de refroidissement 12 du moteur thermique 2. Si la durée d'anticipation DT est strictement inférieure à la durée restante DR, on reboucle vers l'étape E1 de détermination d'un prochain arrêt du moteur thermique.

L'efficacité du système de gestion thermique, en particulier la détermination de l'arrêt du moyen de refroidissement 12, dépend donc de la précision du calcul de la durée restante DR et de la durée d'anticipation DT.

En effet, si la durée restante DR était sous-évaluée ou si la durée d'anticipation DT était surévaluée, on risquerait d'arrêter le moyen de refroidissement 12 trop tôt, ce qui entrainerait une augmentation trop importante de la température du moteur thermique. Cette situation créerait alors un risque d'endommagement du moteur thermique.

A l'inverse, si la durée restante DR était surestimée ou si la durée d'anticipation DT était sous-estimée, le moyen de refroidissement 12 serait maintenu en marche trop longtemps, ce qui réduirait les bénéfices du procédé de gestion thermique.

Ainsi, les différentes méthodes de calcul mises en oeuvre dans les étapes E1 et E2 ont pour objectif d'améliorer la précision de calcul de durée la durée restante DR et de la durée d'anticipation DT, afin d'optimiser les bénéfices et de minimiser les risques induits par le procédé de gestion thermique.

La figure 10 illustre l'évolution relative de la durée restante DR et de la durée d'anticipation DT entre deux instants t₁ et t₂ dans le cas du premier mode d'exécution du procédé, c'est-à-dire dans le cas où aucun événement particulier ne vient modifier son cours.

Lors d'une première exécution de l'étape E3 à l'instant t₁, la durée restante DR a la valeur DR₁. Cette durée (calculée dans l'étape E1) correspond à la durée entre l'instant t₁ d'exécution du procédé et l'instant TA₁ d'arrêt prévu du moteur. La durée d'anticipation DT a la valeur DT₁, cette durée d'anticipation est calculée selon une des méthodes mises en oeuvre par l'étape E2. La durée restante DR₁ étant supérieure au délai d'anticipation DT₁ selon la figure 10, on reboucle vers l'étape E1 sans arrêter le moyen de refroidissement 12.

Lors d'une exécution ultérieure de l'étape E3 à l'instant t₂, on compare à nouveau la durée restante DR, qui a la valeur DR₂, et la durée d'anticipation DT qui a la valeur DT₂. Si aucun événement particulier n'est intervenu entre t₁ et t₂, la date prévue d'arrêt du moteur TA est relativement constante entre deux instants t₁ et t₂. On suppose dans la figure 10 que l'instant TA₂ est égal à l'instant TA₁. De ce fait, la durée restante DR₂ avant arrêt du moteur thermique décroit de la valeur t₂ - t₁. La variation de la durée d'anticipation DT entre les instants t₁ et t₂ dépend du choix de réalisation de ce calcul. Le choix illustré dans la figure 10 est celui d'une durée d'anticipation DT constante dans le temps, ce qui signifie que la durée d'anticipation DT₂ est égale à la durée d'anticipation DT₁.

L'évolution relative de la durée restante DR et de la durée d'anticipation DT dans ce cas de figure est telle que la durée d'anticipation DT₂ est supérieure à la durée restante DR₂. On arrête donc le moyen de refroidissement 12 du moteur.

La troisième étape E3 comprend une sous étape d'arrêt du moyen de refroidissement 12. L'arrêt du moyen de refroidissement 12 peut être commandé directement au niveau de la pompe à eau 121, ou d'une vanne 122 permettant l'ouverture et la fermeture du circuit de refroidissement en sortie du moteur thermique 2.

Selon le mode de réalisation du système de gestion thermique (avec une pompe à eau débrayable ou électrique 121, ou une vanne 122), l'étape E3 du procédé de gestion thermique peut soit générer une commande d'arrêt d'une pompe à eau 121, soit générer une commande de fermeture d'une vanne 122.

Dans une quatrième étape E4, à l'issue d'un délai après arrêt du moyen de refroidissement, le moteur thermique 2 s'arrête. Si l'estimation de la durée d'anticipation DT réalisée lors de la deuxième étape E2 est correcte, ce délai est donc inférieur ou égal au délai d'anticipation DT.

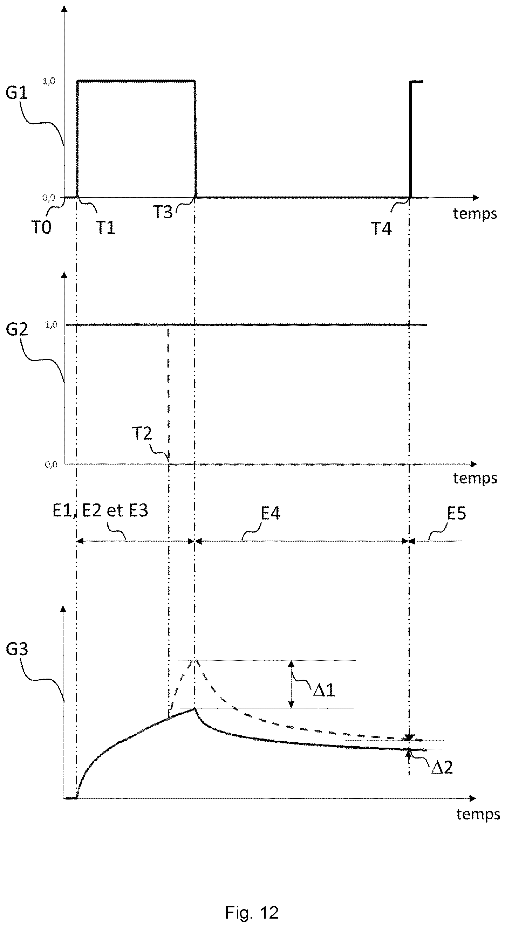

La figure 12 illustre l'évolution temporelle de la température du moteur en fonction du choix de stratégie de refroidissement du moteur, en particulier en fonction des étapes E1 à E5 du procédé de gestion thermique. La figure 12 comprend trois graphes G1, G2, et G3 alignés sur une même échelle de temps.

Le graphe G1 de la figure 14 représente l'état du moteur thermique : le moteur thermique 2 est arrêté entre les instants T0 et T1, puis démarré entre les instantsT1 et T3, puis de nouveau arrêté après l'instant T3 et redémarré à l'instant T4.

Le graphe G2 est composé de deux courbes représentent l'évolution temporelle de l'état du moyen de refroidissement 12 :
- la courbe en trait continu représente une stratégie consistant à maintenir le refroidissement quel que soit l'état du moteur,
- la courbe en traits pointillés représente l'évolution de l'état du moyen de refroidissement 12 avec mise en oeuvre du procédé de gestion thermique selon un mode de réalisation de l'invention.

Les deux courbes du graphe G2 sont superposées entre les instants T0 et T2 : le moyen de refroidissement 12 est alors actif quelle que soit la stratégie appliquée. A partir de l'instant T2, selon l'étape E3 du procédé de gestion thermique 1, on désactive le moyen de refroidissement.12. Selon la stratégie représentée par la courbe en trait continu, on maintient le refroidissement.

Le graphe G3 est composé de deux courbes représentent l'évolution temporelle de la température des parois des chambres de combustion du moteur thermique :
- la courbe en trait continu représente l'évolution temporelle de la température des parois des chambres de combustion du moteur thermique selon une stratégie consistant à maintenir le refroidissement quel que soit l'état du moteur,
- la courbe en traits pointillés représente l'évolution temporelle de la température des parois des chambres de combustion du moteur thermique avec mise en oeuvre du procédé de gestion thermique selon l'invention.

Les deux courbes sont superposées jusqu'à l'instant T2 où conformément à l'étape E3 du procédé de gestion thermique, on désactive le moyen de refroidissement 12. Entre T0 et T2, les deux courbes superposées montrent une augmentation de la température des parois des chambres de combustion du moteur thermique en fonction du temps.

Par la suite, entre l'instant T2 d'arrêt du refroidissement et l'instant T3 d'arrêt du moteur, les deux courbes divergent :
- dans le cas du maintien du refroidissement, l'augmentation de la température des parois des chambres de combustion du moteur thermique continue sensiblement selon la même pente qu'en T2,
- dans le cas de la mise en oeuvre du procédé de gestion thermique, la courbe marque un décrochage important en l'instant T2 correspondant à une accélération de l'augmentation de la température des parois des chambres de combustion du moteur thermique.

A partir de l'instant T3, le moteur thermique 2 s'arrête. Le graphe G3 permet de matérialiser l'augmentation de température des parois des chambres de combustion du moteur thermique Δ1 obtenue à l'instant T3 grâce à la mise en oeuvre du procédé de gestion thermique.

Durant l'étape E4 d'arrêt du moteur, la température des parois des chambres de combustion du moteur thermique décroit tout en restant nettement supérieure à la température qui aurait été obtenue en l'absence du procédé de gestion thermique.

Dans le premier mode d'exécution du procédé de gestion thermique 1 représenté dans la figure 3, l'étape E4 est suivie d'une étape E5 de remise en marche à chaud du moteur thermique. Le redémarrage du moteur thermique est dit à chaud puisqu'il est effectué lors d'un même cycle d'utilisation du véhicule. Le redémarrage du moteur thermique peut être réalisé par exemple de l'ordre de quelques minutes après son arrêt. L'arrêt du moteur lors de l'étape E4 devrait donc être distingué d'un arrêt complet du véhicule.

La remise en marche du moteur thermique 2 peut être conditionnée par le niveau de charge de la batterie 3, ou la température relevée au niveau du système de post-traitement des émissions polluantes 7. Par exemple, lorsque le niveau de charge de la batterie 3 devient inférieur à un seuil donné, le moteur électrique 4 peut passer le relai au moteur thermique 2, le temps de recharger la batterie 3. Lorsque la température relevée au niveau du système de post-traitement des émissions polluantes 7 atteint un seuil minimum donné il peut être nécessaire de remettre en marche le moteur thermique afin d'y rétablir une température suffisante pour son bon fonctionnement.

Dans un mode de réalisation du procédé de gestion thermique, une loi de corrélation entre la température du système de post-traitement des émissions polluantes 7 et la température du liquide de refroidissement TCO est connue. Les seuils de températures concernant le système de post-traitement des émissions polluantes sont donc rapportés à des seuils concernant la température TCO. Autrement dit, le procédé de gestion thermique 1 prend en compte l'évolution de la température du système de post-traitement des émissions polluantes 7 à travers la prise en compte de l'évolution de la température TCO.

Dans ce mode de réalisation, représenté sur les graphes G1, G2 et G3 de la figure 12, lorsque le moteur thermique redémarre à un instant T4 pour prendre le relai du moteur électrique et recharger la batterie, la mise en oeuvre du procédé de gestion thermique a limité le refroidissement du moteur et du système de post-traitement des émissions polluantes. A l'instant T4 du redémarrage du moteur thermique 2, le gain en température des parois des chambres de combustion du moteur thermique est de Δ2 degrés.

Les effets du gain en température Δ2 lors de redémarrage du moteur thermique 2 sont multiples.

L'augmentation de la température des parois des chambres de combustion du moteur thermique au démarrage permet aux chambres de combustion de fonctionner dans de meilleures conditions de température, et ainsi de réduire les émissions polluantes du véhicule.

De plus, le gain Δ2 mesuré sur la température des parois des chambres de combustion du moteur thermique peut généralement se traduire par un gain en température au niveau du catalyseur du système de post-traitement des émissions polluantes 7. Le catalyseur, dont le rôle est de détruire les émissions polluantes, fonctionne d'autant mieux que sa température est élevée. Lors du redémarrage du moteur thermique, le gain en température au niveau du catalyseur permet donc de réduire les émissions polluantes.

Par ailleurs, l'huile du moteur étant plus chaude au redémarrage, elle est également plus fluide et génère une résistance moindre, ce qui permet de réduire les frottements internes du moteur et donc de réduire la consommation en carburant et les émissions polluantes.

L'étape E5 de remise en marche du moteur thermique 2 comprend une sous-étape de remise en marche du refroidissement moteur. L'ordre de redémarrage peut varier entre le moteur thermique 2 et le moyen de refroidissement 12.

Après redémarrage du moteur thermique et du moyen de refroidissement 12, l'étape E5 reboucle sur l'étape E1 de détermination d'un arrêt prochain du moteur thermique. Ainsi le procédé peut être répété indéfiniment lors d'un cycle d'utilisation du véhicule.

Un second mode d'exécution du procédé de gestion thermique est présenté dans la figure 4, afin de décrire le traitement mis en oeuvre quand des événements dits particuliers surviennent durant le déroulement du procédé de gestion thermique.

Lesdits événements particuliers peuvent inclure le dépassement de seuils limites associés à chacune des données suivantes :
- la température du liquide de refroidissement en sortie du moteur,
- ou la température estimée des parois de la culasse,
- ou la puissance du moteur thermique,
- ou le régime du moteur thermique.

Lesdits événement particuliers peuvent inclure également la mise en marche du chauffage 5 ou de la climatisation 6 dans l'habitacle du véhicule hybride 10.

La survenue de tels événements peut modifier le déroulement des différentes étapes du procédé de gestion thermique.

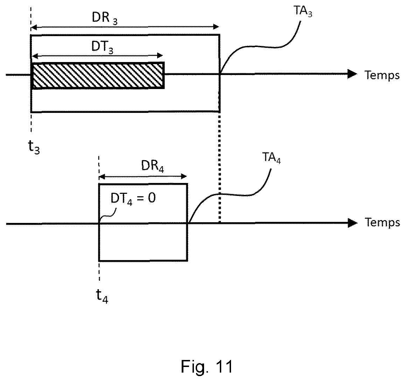

Un premier exemple montrant l'impact d'un événement particulier sur le déroulement des étapes E1 à E3 est décrit dans la figure 11. Cette figure illustre l'évolution relative de la durée restante DR et de la durée d'anticipation DT entre deux instants t₃ et t₄, ces instants se situant tous deux avant l'instant prévu d'arrêt du moteur TA₃ et TA₄. Dans cet exemple on suppose que la température TCO du liquide de refroidissement augmente fortement entre ces deux instants et dépasse un seuil limite. Dans un mode de réalisation de l'étape E2 mettant en oeuvre, par exemple, une variation de la durée d'anticipation DT en fonction de la température TCO telle que décrite par la fonction 121 (figure 9), la durée d'anticipation DT₄ prendra alors une valeur nulle. Autrement dit, tant que la température TCO du liquide de refroidissement restera supérieure à un seuil limite donné, l'étape E3 n'est pas exécutée et on n'anticipe pas l'arrêt du moyen de refroidissement. On reboucle alors sur l'étape E1.

Un deuxième exemple, montrant l'impact d'un événement particulier sur le déroulement de l'étape E3, est décrit dans le mode d'exécution représenté par la figure 4. Un événement particulier (par exemple le dépassement du seuil associé à la puissance du moteur) survient au cours de l'étape E3, lorsque le moteur thermique 2 est encore en marche et le moyen de refroidissement 12 est arrêté.

Dans ce cas, on enclenche une étape E6 de remise en marche du moyen de refroidissement 2.

Selon le mode de réalisation du système de gestion thermique 1 (avec une pompe à eau débrayable ou électrique 121 ou une vanne 122), l'on peut soit générer une commande de mise en marche de la pompe à eau 121, soit générer une commande d'ouverture de la vanne 122.

L'étape E6, qui est déclenchée par la survenue d'événements particuliers, permet d'éviter une hausse de température trop importante, pouvant aboutir à un endommagement du moteur thermique.

A l'issue de l'étape E6 le procédé de gestion thermique reboucle sur l'étape E1 de détermination d'un arrêt prochain du moteur thermique.

Ainsi, selon les étapes précédemment décrites, la mémoire 112 du système de gestion thermique 1 comprend :
- un module 1121 de détermination d'un arrêt prochain du moteur thermique 2, ce module comprenant de préférence un élément logiciel inclus dans la mémoire 112,
- un module 1122 de calcul d'une durée d'anticipation DT pendant laquelle le moteur thermique pourrait fonctionner tout en ayant coupé son refroidissement, ce module comprenant de préférence un élément logiciel inclus dans la mémoire 112,
- un module 1123 d'arrêt d'un moyen de refroidissement 12 du moteur thermique, ce module comprenant de préférence un élément logiciel inclus dans la mémoire 112,
- un module 1124 d'arrêt du moteur thermique, ce module comprenant de préférence un élément logiciel inclus dans la mémoire 112,
- un module 1125 de remise en marche du moteur thermique, ce module comprenant de préférence un élément logiciel inclus dans la mémoire 112, et
- un module 1126 de remise en marche d'un moyen de refroidissement 12 du moteur thermique, ce module comprenant de préférence un élément logiciel 16 inclus dans la mémoire 112.

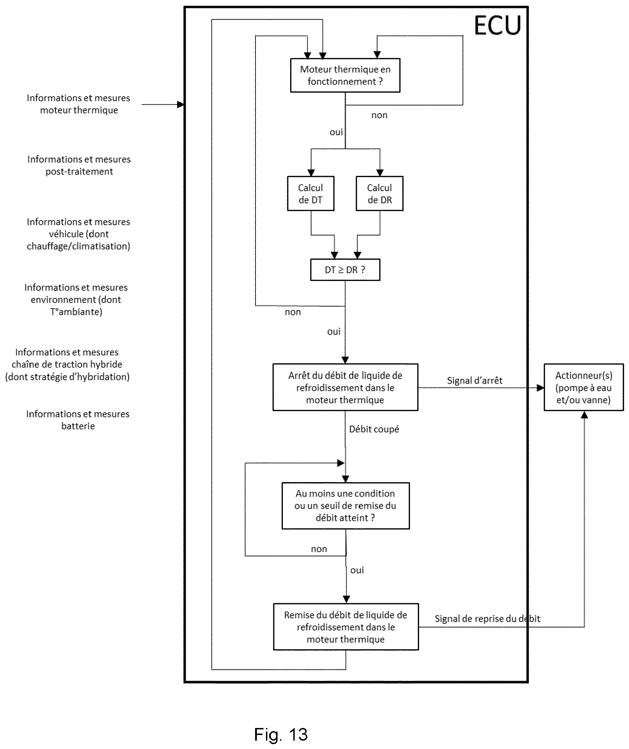

La figure 13 fournit une autre représentation du procédé de gestion thermique.

Dans une première étape S1, on vérifie le statut du moteur thermique :
- s'il est arrêté, on reboucle sur cette première étape,
- s'il est en marche, on passe aux étapes suivantes.

Une deuxième étape S2 et une troisième étape S3 sont menées en parallèles :
- dans la deuxième étape S2, on calcule une durée restante DR avant un arrêt prochain du moteur,
- dans la troisième étape S3, on calcule une durée d'anticipation DT pendant laquelle le moteur thermique pourrait fonctionner tout en ayant coupé son refroidissement.

Dans une quatrième étape S4, on compare la durée restante DR et la durée d'anticipation DT :
- si la durée restante DR est strictement supérieure à la durée d'anticipation DT, alors on reboucle sur la première étape de vérification du statut du moteur thermique,
- sinon on enclenche une cinquième étape S5.

Une cinquième étape émet un signal d'arrêt vers le moyen de refroidissement 12, puis enclenche une sixième étape S6.

Une sixième étape S6 évalue les conditions de remise en marche du moyen de refroidissement 12 :
- si au moins une condition de remise en marche du moyen de refroidissement est vérifiée, on émet une signal de démarrage vers le moyen de refroidissement 12, puis reboucle sur la première étape,
- sinon on reboucle sur la sixième étape.

## Revendications

1. Procédé de gestion d'une température d'un moteur thermique (2) d'un véhicule automobile hybride (10), **caractérisé en ce qu'**il comprend :
- une étape (E1) de détermination d'un arrêt prochain du moteur thermique, puis
- une étape (E3) d'arrêt d'un moyen de refroidissement (12) du moteur thermique, puis au terme d'une durée non nulle
- une étape (E4) d'arrêt du moteur thermique,
l'étape (E1) de détermination de l'arrêt prochain du moteur thermique comprenant une sous-étape (E11) de calcul d'une durée restante (DR) avant ledit arrêt prochain du moteur,
le procédé comprenant une étape (E2) de calcul d'une durée d'anticipation (DT) entre l'arrêt du moyen de refroidissement et l'arrêt du moteur thermique, ladite étape (E3) d'arrêt d'un moyen de refroidissement étant exécutée dès que ladite durée d'anticipation (DT) est supérieure ou égale à ladite durée restante (DR),
**caractérisé en ce que** ladite durée restante (DR) est calculée en fonction d'au moins un des paramètres suivants :
- une température du moteur thermique,
- une température du système de post-traitement des émissions du moteur thermique
- une puissance du moteur thermique,
- un couple du moteur thermique,
- un régime du moteur thermique
et **en ce qu'**il comprend une étape (E6) de remise en marche du moyen de refroidissement (12) du moteur thermique après ladite étape (E3) d'arrêt du moyen de refroidissement si une caractéristique de fonctionnement atteint ou dépasse une valeur prédéterminée, notamment si une température du moteur thermique devient supérieure ou égale à un seuil de température et/ou si la puissance du moteur thermique devient supérieure ou égale à un seuil de puissance et/ou si le régime du moteur thermique devient supérieur ou égal à un seuil de régime moteur,
et si une utilisation d'un chauffage ou d'une climatisation dans un habitacle du véhicule est détectée.

2. Procédé de gestion selon la revendication 1, **caractérisé en ce que** ladite durée d'anticipation (DT) est calculée en fonction d'au moins un des paramètres suivants :
- une température du moteur thermique,
- une puissance du moteur thermique,
- un couple du moteur thermique,
- un régime du moteur thermique,
- un paramètre d'endommagement thermomécanique du moteur thermique.

3. Procédé de gestion selon la revendication 1 ou 2, **caractérisé en ce que** les valeurs desdits paramètres sont définies soit par des mesures à un instant donné, soit par des extrapolations linéaires à partir de mesures antérieures, soit par des modèles d'évolution de ces paramètres.

4. Procédé de gestion selon l'une des revendications précédentes **caractérisé en ce qu'**il comprend une étape (E5) de redémarrage à chaud du moteur thermique après ladite étape (E4) d'arrêt du moteur thermique.

5. Système de refroidissement (1) pour un moteur thermique d'un véhicule automobile hybride comprenant des éléments matériels (1, 11, 12, 111, 112, 121, 122) et/ou des éléments logiciels (1121, 1122, 1123, 1124, 1125, 1126, 1127) configurés pour mettre en oeuvre le procédé selon l'une des revendications précédentes.

6. Véhicule automobile (10) comprenant un système de refroidissement selon la revendication précédente.

## Patentansprüche

1. Verfahren zur Steuerung einer Temperatur eines Verbrennungsmotors (2) eines Hybrid-Kraftfahrzeugs (10), **dadurch gekennzeichnet, dass** es Folgendes umfasst:
- einen Schritt (E1) zur Bestimmung eines bevorstehenden Stopps der Wärmekraftmaschine, dann
- einen Schritt (E3) des Stopps eines Kühlmittels (12) des Verbrennungsmotors, dann nach Ablauf einer sich von Null unterscheidenden Dauer
- einen Schritt (E4) zum Stoppen des Verbrennungsmotors,
wobei der Schritt (E1) des Bestimmens des nächsten Stopps des Verbrennungsmotors einen Unterschritt (E11) des Berechnens einer verbleibenden Dauer (DR) vor dem nächsten Stopp des Motors umfasst,
das Verfahren einen Schritt (E2) zur Berechnung einer Vorgriffsdauer (DT) zwischen dem Stopp des Kühlmittels und dem Stopp des Verbrennungsmotors umfasst, wobei der Schritt (E3) des Stopps eines Kühlmittels ausgeführt wird, sobald die Vorgriffsdauer (DT) größer oder gleich der verbleibenden Dauer (DR) ist,
**dadurch gekennzeichnet, dass die** verbleibende Dauer (DR) in Abhängigkeit von mindestens einem der folgenden Parameter berechnet wird:
- eine Temperatur des Verbrennungsmotors,
- eine Temperatur des Abgasnachbehandlungssystems des Verbrennungsmotors
- eine Leistung des Verbrennungsmotors,
- ein Drehmoment von des Verbrennungsmotors,
- eine Drehzahl des Verbrennungsmotors
und dass es einen Schritt (E6) zum erneuten Einschalten des Kühlmittels (12) des Verbrennungsmotors nach dem Schritt (E3) zum Stopps des Kühlmittels umfasst, wenn eine Betriebscharakteristik einen vorbestimmten Wert erreicht oder überschreitet, insbesondere wenn eine Temperatur des Verbrennungsmotors größer oder gleich einem Temperaturschwellenwert wird und/oder wenn die Leistung des Verbrennungsmotors größer oder gleich einem Leistungsschwellenwert wird und/oder wenn die Drehzahl des Verbrennungsmotors größer oder gleich einem Motordrehzahlschwellenwert wird,
und wenn die Verwendung einer Heizung oder Klimaanlage in einem Fahrzeuginnenraum festgestellt wird.

2. Verwaltungsverfahren nach Anspruch 1, **dadurch gekennzeichnet, dass** die Vorgriffsdauer (DT) in Abhängigkeit von mindestens einem der folgenden Parameter berechnet wird:
- eine Temperatur des Verbrennungsmotors,
- eine Leistung des Verbrennungsmotors,
- ein Drehmoment von des Verbrennungsmotors,
- eine Drehzahl des Verbrennungsmotors,
- ein Parameter für die thermomechanische Beschädigung des Verbrennungsmotors.

3. Verwaltungsverfahren nach Anspruch 1 oder 2,
**dadurch gekennzeichnet, dass** die Werte der genannten Parameter entweder durch Messungen zu einem bestimmten Zeitpunkt, durch lineare Extrapolationen aus früheren Messungen oder durch Modelle für die Entwicklung dieser Parameter definiert werden.

4. Verwaltungsverfahren nach einem der vorhergehenden Ansprüche,
**dadurch gekennzeichnet, dass** es einen Schritt (E5) des Heißneustarts des Verbrennungsmotors nach dem Schritt (E4) des Stopps des Verbrennungsmotors umfasst.

5. Kühlsystem (1) für einen Verbrennungsmotor eines Hybrid-Kraftfahrzeugs mit Hardware-Elementen (1, 11, 12, 111, 112, 121, 122) und/oder Software-Elementen (1121, 1122, 1123, 1124, 1125, 1126, 1127), die zur Durchführung des Verfahrens nach einem der vorhergehenden Ansprüche konfiguriert sind.

6. Kraftfahrzeug (10) mit einem Kühlsystem nach dem vorhergehenden Anspruch.

## Claims

1. A method for managing a temperature of a heat engine (2) of a hybrid motor vehicle (10), **characterized in that** it comprises:
- a step (E1) of determining a next shutdown of the heat engine, then
- a step (E3) of shutting down a cooling means (12) of the heat engine, then after a non-zero time
- a step (E4) of shutting down the heat engine,
the step (E1) of determining the next shutdown of the heat engine comprising a sub-step (E11) of calculating a remaining time (DR) before said next shutdown of the engine,
the method comprising a step (E2) of calculating an anticipation time (DT) between the shutdown of the cooling means and the shutdown of the heat engine, said step (E3) of shutting down a cooling means being executed as soon as said anticipation time (DT) is greater than or equal to said remaining time (DR),
**characterized in that** said remaining time (DR) is calculated as a function of at least one of the following parameters:
- a heat engine temperature,
- a temperature in the heat engine's emission aftertreatment system
- a heat engine power,
- a heat engine torque,
- a heat engine speed
and **in that** it comprises a step (E6) of restarting the cooling means (12) of the heat engine after said step (E3) of shutting down the cooling means if an operating characteristic reaches or exceeds a predetermined value, in particular if a temperature of the heat engine becomes greater than or equal to a threshold temperature and/or if the power of the heat engine becomes greater than or equal to a threshold power and/or if the speed of the heat engine becomes greater than or equal to an engine threshold speed,
and if the use of a heating or air-conditioning system in a cabin of the vehicle is detected.

2. The management method according to claim 1, **characterized in that** said anticipation time (DT) is calculated as a function of at least one of the following parameters:
- a heat engine temperature,
- a heat engine power,
- a heat engine torque,
- a heat engine speed,
- a thermomechanical damage parameter of the heat engine.

3. The management method according to claim 1 or 2, **characterized in that** the values of said parameters are defined either by measurements at a given instant, or by linear extrapolations from previous measurements, or by models of evolution of these parameters.

4. The management method according to one of the preceding claims, **characterized in that** it comprises a step (E5) of hot restarting the heat engine after said step (E4) of shutting down the heat engine.

5. A cooling system (1) for a heat engine of a hybrid motor vehicle comprising hardware elements (1, 11, 12, 111, 112, 121, 122) and/or software elements (1121, 1122, 1123, 1124, 1125, 1126, 1127) configured to implement the method according to one of the preceding claims.

6. A motor vehicle (10) comprising a cooling system according to the preceding claim.
